# EUROPEAN PATENT SPECIFICATION

(11) **EP 1 981 725 B1**
(45) Date of publication and mention of the grant of the patent: **17.02.2010**
(21) Application number: 07703789.3
(22) Date of filing: 11.01.2007
(51) Int. Cl.: B60C 27/20

(54) **ANTI-SKID DEVICE LOCATED IN A CIRCUMFERENTIAL GROOVE OF A TIRE**
IN EINER UMFANGSNUT EINES REIFENS ANGEORDNETE GLEITSCHUTZVORRICHTUNG
DISPOSITIF ANTIDERAPANT SITUE DANS UNE RAINURE CIRCONFERENTIELLE D'UN PNEU

(30) Priority: 07.02.2006 GR 20060100072; 03.05.2006 GR 20060100258
(43) Date of publication of application: 22.10.2008
(73) Proprietor: Roussos, Konstantinos, 56727 Neapoli Thessalonikis (GR)
(72) Inventor: Roussos, Konstantinos, 56727 Neapoli Thessalonikis (GR)
(74) Representative: Samuelides, Emmanuel
(86) International application number: PCT/EP2007/050244
(87) International publication number: WO 2007/090706

(56) References cited:
- FR-A- 486 298
- FR-A1- 2 715 892
- GB-A- 124 056
- GB-A- 125 882

## Description

The invention refers to anti-skid devices for car tires. The device may be applied on any type of vehicle wheels, and in particular on wheels of passenger cars.

The usual means to prevent gliding on the ground surface covered with snow, ice or mad is the use of chains. Known chains are usually applied around the tread of the tires, so that the wheel may rotate on icy roads. However, known chains present problems, because their use reduces the effectiveness of the braking action. Further the chains decrease the stability of the car and produce vibrations. Anti-skid devices,, according to the preamble of claim 1, comprising a plurality of contact elements to contact the surface of the ground are disclosed in GB124056, GB125882 and FR2715892. The contact elements of GB125882 and FR2715892 have corrugations that, when the devices are in use, are placed within the circumferential groove of the tire. The contact elements of the device disclosed in GB124056 have an inner face to contact the tire and an outer face to contact the ground. The inner face of the contact-elements of this device has a web to be fitted within the circumferential groove of the tire.

The object of the invention is to improve safety of vehicles traveling on slippery ground, so that to resolve the problems that are associated with the use of known anti-skid devices.

The anti-skid device for tires according to the invention is defined in independent claim 1.

The anti-skid device according to the invention improves the adhesion of the wheel to the surface of an icy, wet or slippery road, or more generally ground, decreases the vibrations and facilitates braking and turning. The installation of the device around the wheel is simple and its application has a universal character, i.e. the anti-skid device may be applied around wheels of various dimensions and of various types of vehicles. Further it may be used also when the conditions of the surface of the road are normal, i.e. the surface is not slippery. This adds a further advantage, because the driver does not need to install and remove it whenever the conditions of the road surface change, as for example when the car enters or exits a tunnel.

The two ends of the anti-skid device have engagable locking means to engage the two ends of the anti-skid device so that the contact elements form a closed-shaped flexible ring structure to be fitted, in use, around the tire. Preferably the locking means are arranged in the contact elements that are located adjacent to each one of the two ends, of the anti-skid device. In order to improve the fitting of the anti-skid device on the tread of the tire, the anti-skid device has tensioning means to apply tension and to press the antiskid device on the tread of the tire.

The outer surface of the contact elements may have a protrusion to contact the ground. The protrusion is penetrated by a hole with open ends, which is arranged parallel to the webs. A spring is provided through the said holes. The spring has a dual function it keeps the contact elements together and it provides the tension that presses the anti-skid device around the tire.

Further spring elements may be optionally provided to improve the adhesion of the tire to the ground. Preferably these spring elements are arranged in cavities formed on the outer surface of the contact elements. If an anti skid device contains both a) a spring that keeps the contact elements together, and b) spring elements to improve the adhesion to the ground, the spring elements have a larger diameter, so that they could be arranged around the spring that keeps the contact elements together.

According to the invention at least two adjacent contact-elements are formed as a single cast module. Preferably a module comprises five contact elements.

The contact elements may be manufactured by plastic, for example polyurethane, metal or any other material that provide adequate strength.

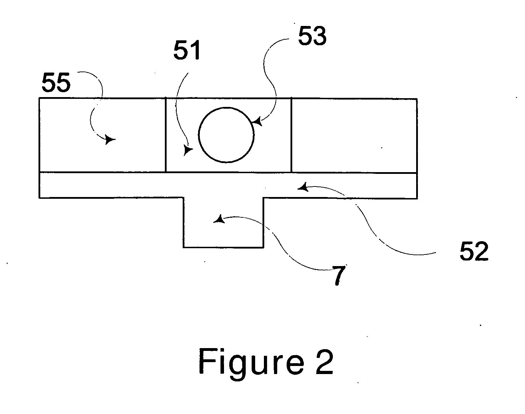

Preferred embodiments of the invention will be described in detail below, with reference to the accompanying **figures 1** to **9****.**
**Figure 1** shows one embodiment of a contact element of the anti-skid device.
**Figure 2** shows a side of the contact element.
**Figure 3** shows the outer face of five consecutive contact elements with a spring passing through them.
**Figure 4** shows a side of a terminal contact element.
**Figure 5** shows the outer face of a terminal contact element, i.e. the face that comes in contact with the ground when the anti-skid device is applied around the tread of a tire.
**Figure 6** shows a mode of joining the terminal contact elements.
**Figure 7** shows a single cast module with five contact elements.
**Figure 8** shows a single cast module with five contact elements, whereby one of the contact elements is a terminal contact element.
**Figure 9** shows an anti-skid device according to the invention applied around the tread of a-tire.
**Figure 10** shows a photograph of a tire with an anti-skid device according to the invention.

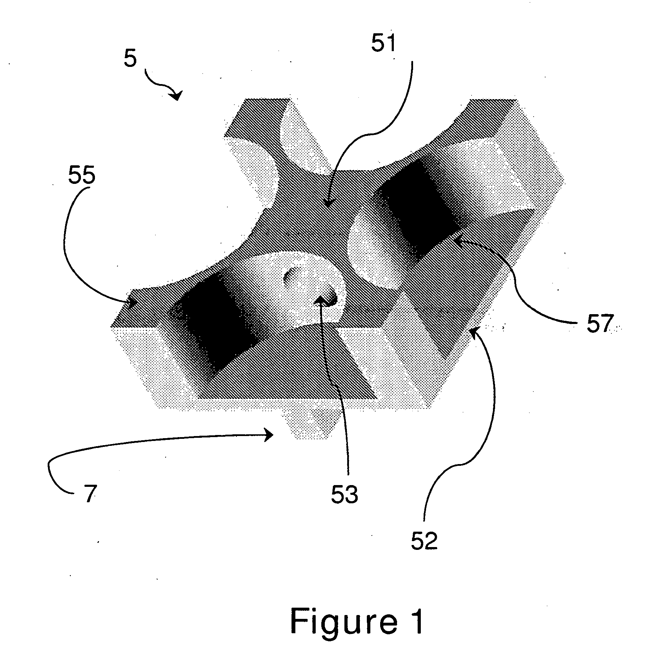

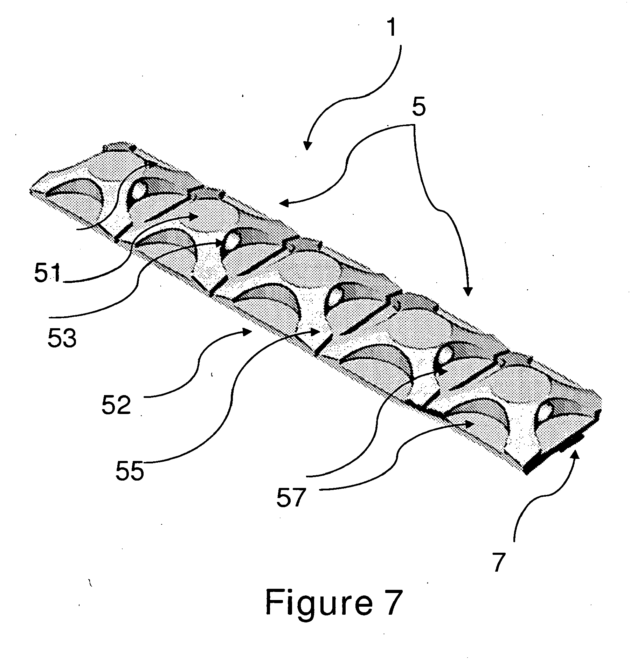

An embodiment of an anti-skid device comprises contact elements **5,** such as the contact element **5** that is shown in **figure 1****.** The element has a base **52** having a shape of a parallelepiped, with an inner face that contacts the tread of the tire and an opposite outer face that contacts the ground. The edge of the rectangular face of the embodiment of **figure 1** is approximately 45 mm and the thickness of the parallelepiped is approximately 3 to 4 mm. The inner face of the contact element **5,** i.e. the face that comes in contact with the tread of the wheel, has a web **7,** which is to be fitted within the circumferential groove of the tread of the tire. The outer face of the contact element **5,** i.e. the face that contacts the ground, has a protrusion **51,** located in its centre. The protrusion **51** has a longitudinal cylindrical hole **53,** which is arranged parallel to the web **7.** Between the protrusion **51** and the four peaks of the rectangular outer face there are four ribs **55** that stiffen the element 5. According to the embodiment of **figure 7** the height of the ribs **55** decreases towards the peaks of the rectangular face. Four cavities **57** are formed between ribs **55.** Two, out of the four cavities **57** communicate via the open ended cylindrical hole **53.** The height of the embodiment of the contact element of **figure 1****,** i.e. the distance from the free edge of the web **7** to the top of the protrusion **51** is approximately 18 mm.

The anti-skid device consists of a plurality of contact elements **5,** arranged in a row, one next to another along a line, with the webs **7** disposed along the same line. The elements **5** are connected with a spring **9.**The two ends of the anti-skid device have engagable locking means to lock its ends, so that the contact elements form a closed-shaped flexible structure to be fitted, in use, around the tire. Preferably the locking means are arranged in the contact elements that are located adjacent to each one of the two ends, of the anti-skid device, as described below.

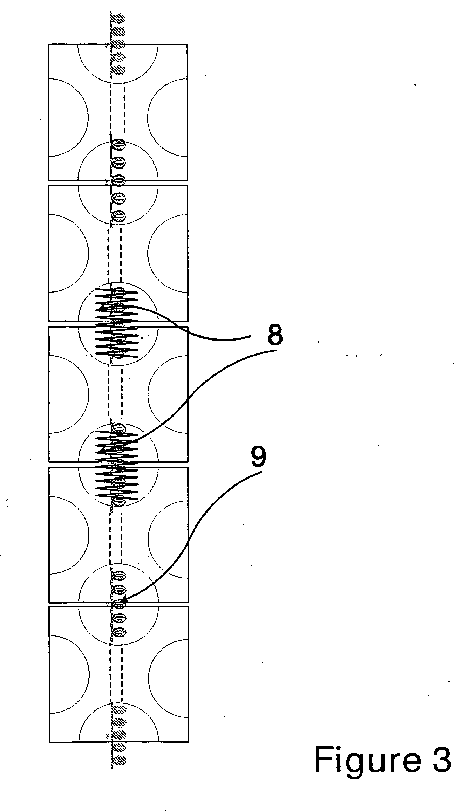

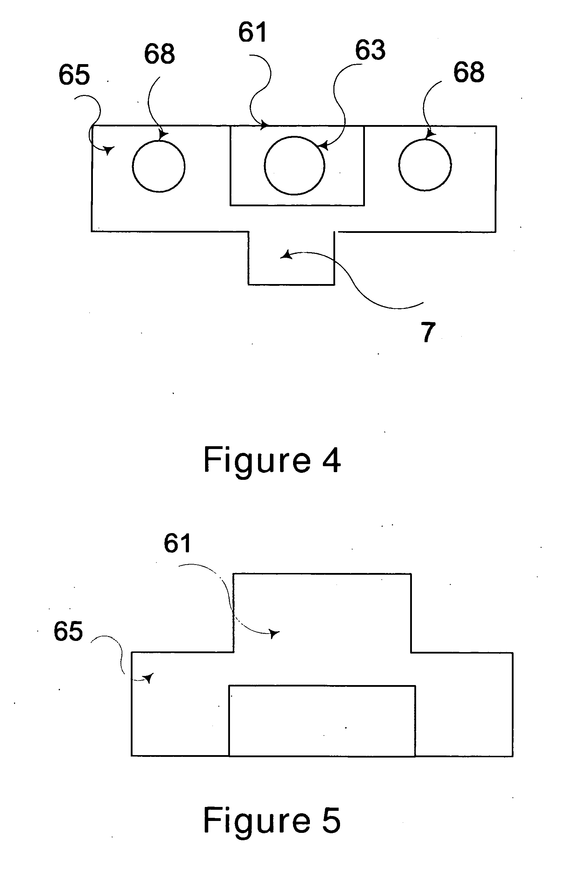

The spring **9** is passing through the cylindrical holes **53,** which penetrate the protrusions **51** of the contact elements **5.** **Figure 3** shows five consecutive contact elements connected by the spring 9. Each one of the two ends of the spring **9** is anchored to its respective terminal contact element 6. The terminal contact elements **6** are presented in **figures 4, 5****,** **6****,** **8****.** The terminal contact element **6** has an inner face that contacts the tread of the tire and an opposite outer face that contacts the ground. The inner face of the terminal contact element **6,** i.e. the face that comes in contact with the tread of the tire has a web **7,** which is fitted, in use, within the groove of the tread of the tire. The outer face of the terminal contact element **6,** i.e. the face that comes in contact with the ground, has a protrusion **61** on its centre, and two ears **65** disposed one to the left and the other to the right of the protrusion **61.** A cylindrical hole **63** penetrates the protrusion **61,** which when the anti-skid device is in place, is disposed approximately along the same line with the respective cylindrical hole **53** of the adjacent contact element. Each end of the spring **9** is anchored within a hole **63** of a terminal element. The end of the spring may be maintained in its anchoring position via anchoring means. A hole **68** is provided in each of the ears **65.** The terminal contact element **6** is cast and made of polyurethane, similarly to the contact element **5.**

The anti-skid device is assembled as presented below: The first time that the user wishes to put the anti-skid around a wheel, he or she will join the two terminal contact elements **6** using the locking means that are provided at the ends of the anti-skid device. In the preferred embodiment, the locking means are provided on the terminal contact elements **6.** These locking means comprise bolts and nuts that pass through the holes 68 formed in the ears **65** of the terminal contact elements **6.** When the terminal contact elements are locked together the contact elements **5** and **6** form a flexible ring structure with a closed cross-section, to be fitted around the tread of the tire. The flexibility of the structure allows it to be fitted around the wheel and to follow the deformations of the wheel as it moves on any ground or road. The anti-skid device has an inner surface and an outer surface. The inner surface of the anti-skid device consists of the inner surfaces of the contact elements **5** and the terminal contact elements **6** and the outer surface of the anti-skid device consists of the outer surfaces of the contact elements 5 and the terminal contact elements **6.** The webs **7** are disposed along the circumference of the inner surface and the protrusions **51** and the ribs **55** in the outer surface of the anti-skid device. The webs **7** will be inserted within the circumferential groove of he tread of the wheel and will guide the anti-skid device in its position around the wheel of the vehicle. When the device is placed around the wheel the protrusions **51** and the ribs **55** will contact the surface of the road or the ground. The anti-skid device may be applied to wheels having different dimensions, by selecting the appropriate number of contact elements. This could be easily done by adding or removing contact elements **5** from it. The anti-skid device is now ready to be applied around the wheel: The anti-skid device is easily fitted to the wheel of a car by simply placing the device over the upper part of the tire, namely the part of the tire that is not in contact with the ground, and fitting the webs **7** within the circumferential groove or grooves of the tread. The hanging part of the device is then left to hang between the tread of the tire and the ground. By driving the car slightly, the wheel turns and the part of the device that is not fitted around the tread, i.e. the hanging part, is also fitted around it. Thus, the anti-skid device is installed along the whole periphery of the tread. The tension of the spring **9** increases the pressure between the tire and the anti-skid device and further secures the device in position around the tread of the wheel.

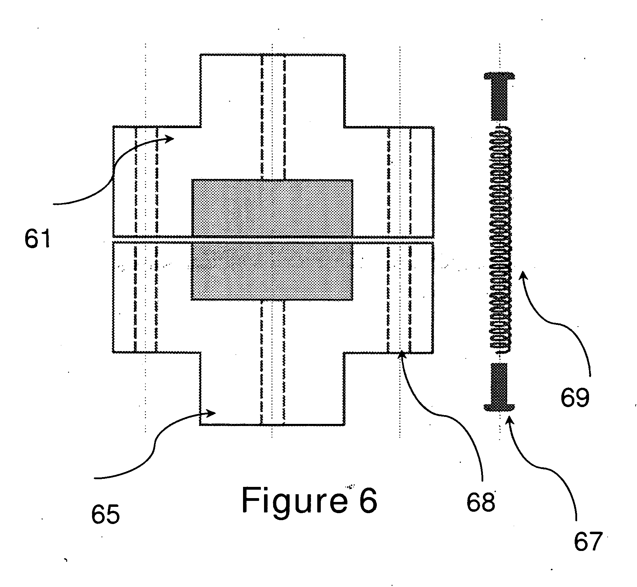

**Figure 6** presents an example of tensioning means, other than the spring **9,** which develop a tension along the anti-skid device and presses the device towards the tread of the wheel. These means function between the two terminal contact elements **6** or between any adjacent contact elements of the anti-skid device. In particular **figure 6** shows that the two terminal contact elements are kept to together by two springs **69,** which springs are passing through the holes **68** of the contact elements 6. The ends of these springs are anchored to anchoring means **67,** which are attached to the terminal contact elements **6.** When the terminal contact elements are joined and the anti-skid device assembled, the springs **69** are in tension within the holes **68.** In the example of the anti-skid device of **figure 6****,** the spring **9** may be substituted by one or more metal sheets or by any other means that may keep the contact elements together, such as a cable. In a further embodiment each pair of adjacent contact elements are kept together by a thin metal sheet anchored in these contact elements.

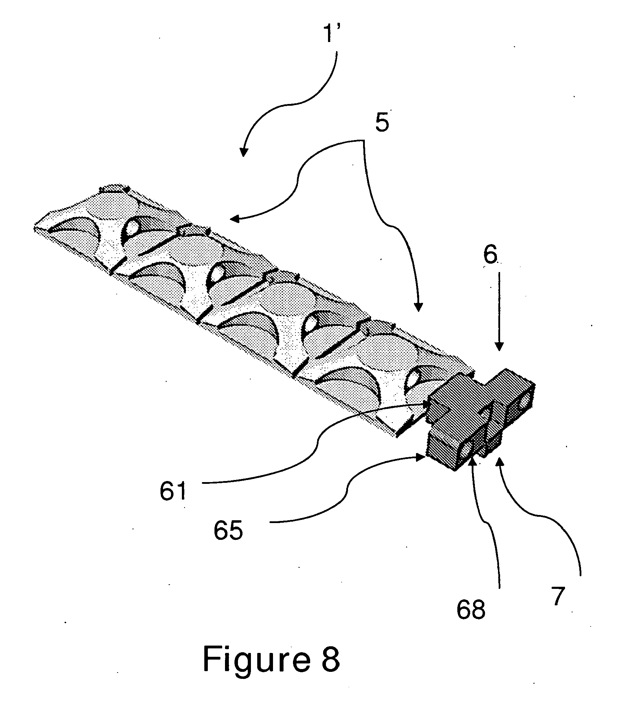

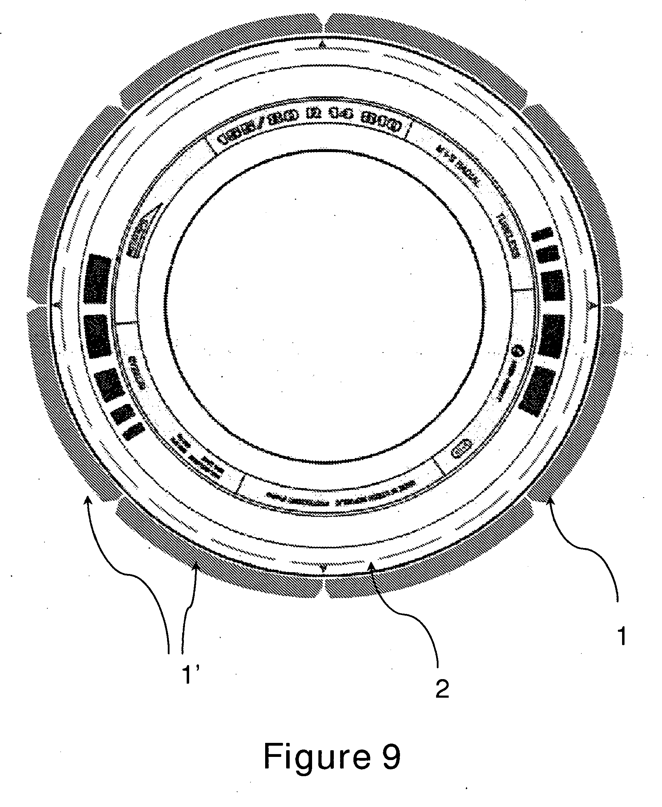

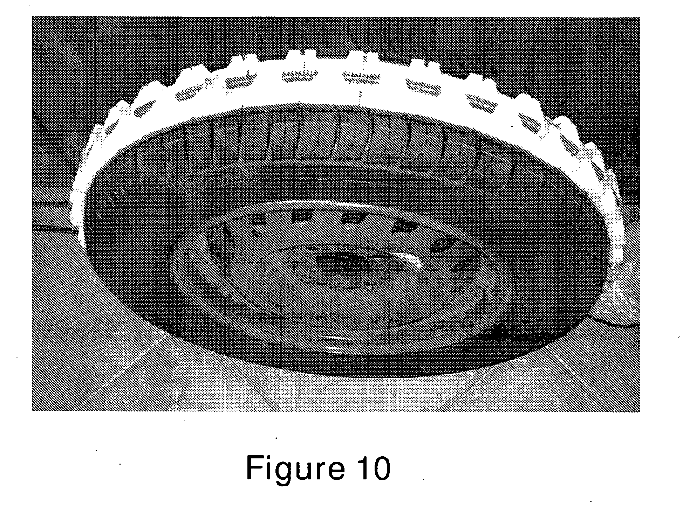

A further embodiment of an anti-skid device in accordance with the invention, which offers further advantages, is presented in **figures 7** and **8****.** In this embodiment five contact elements are formed as a single cast element, i.e. module **1.** Module **1** is made of polyurethane and is cast. The webs **7** are formed by one single continuous web that has a double function: it is fitted within the groove of the tread of the tire and guides the anti-skid device in position on one hand, and keeps the five contact elements together on the other. This mode of joining the contact elements together allows the relative rotation of any contact element with respect to its adjacent contact elements, so that the anti-skid may be deformed as the wheel rotates on the surface of the road or the ground. The anti-skid device made of the modules shown in **figures 7** and **8** may be fitted around the wheel relatively simply and it provides a flexibility that allows it to follow the deformations of the tread of the wheel. **Figure 8** presents a module 1', which consists of four contact elements **5** and a terminal contact element **6.** Module **1'** is cast, it is made of polyurethane and the webs 7 of the four contact elements **5** and the terminal contact element **6** is a single continuous web. **Figure 9** presents an anti-skid device which consists of modules **1** and **1'** fitted around a tire of a vehicle having a groove **2.** Similarly to the case of the anti-skid device that consists of individual contact-elements **5** and **6,** the modules **1** and **1'** of the anti-skid device of **figure 9** are kept together by a spring **9.** A picture of a tire with an anti-skid device according to the invention is shown in figure **10****.**

An optional feature of the anti-skid device are the spring elements **8,** which are located in the cavities **57** around spring **9,** as shown in **figure 3. Figure 3** shows two spring elements **8** located in two cavities **57.** Spring elements **8** may optionally provided in all cavities and may be placed around spring **9.** If the spring elements **8** are placed around spring **9,** spring elements **8** have a larger diameter and a shorter length than the diameter and length of spring **9**.The use of spring elements **8** improve the adhesion of the wheels to the surface of the road.

The embodiment that is presented has dimensions that allow it to be used in various types of tires. The contact elements may be manufactured by plastic, for example polyurethane, metal or any other material that provide adequate strength.

## Claims

1. Anti-skid device for tires comprising a plurality of contact elements **(5, 6),** with each one of the contact elements having an inner face to contact the tire and an outer face to contact the ground, whereby the inner face of the contact-elements has a web **(7), characterized in that** at least two adjacent contact-elements **(5, 6)** is a single cast element, and whereby the webs (7) of the said at least two adjacent contact-elements **(5, 6)** form a single continuous web that join the said at least two contact-elements **(5, 6)** together.

2. Anti-skid device according to claim 1, whereby the contact-elements **(5, 6)** are made of polyurethane.

3. Anti-skid device according to claim 1, whereby the anti-skid device has two ends and a contact element **(6)** adjacent to each one of the two ends, and whereby the two contact elements that are arranged adjacent to each one of the two ends have complementary locking means to engage these two element to each other, so that the plurality of the contact elements **(5, 6)** form a flexible ring structures to be fitted in use around the tire.

4. Anti-skid device according to claim 1, further comprising tensioning means **(9)** to apply tension to the anti-skid device.

5. Anti-skid device according to claim 1, whereby the outer surface of the contact-elements have a protrusion **(51, 61).**

6. Anti-skid device according to claim 1, whereby the outer surface of the contact-elements **(5, 6)** have a protrusion **(51, 61),** the said protrusions have holes **(53, 63)** with open ends arranged parallel to the webs **(7),** and whereby a spring means **(9)** is provided through the said holes **(53, 63).**

7. Anti-skid device **according to claim 1**, further comprising spring elements **(8)** to come in contact with the ground.

8. Anti-skid device according to claim 1, further comprising at least one spring element (8) between two adjacent contact-elements to come in contact with the ground.

9. Anti-skid device according to claim 1, whereby five contact-elements **(5, 6)** is a single cast element, and whereby the webs **(7)** of the said five contact-elements **(5, 6)** form a single continuous web that join the said contact-elements **(5, 6)** together.

## Patentansprüche

1. Anti-Rutschvorrichtung für Reifen, die eine Mehrzahl von Kontaktbauteilen (5, 6) aufweist, wobei jedes der Kontaktbauteile eine innere Fläche für die Berührung mit dem Reifen und eine äußere Fläche für die Berührung mit dem Untergrund aufweist, und wobei die innere Fläche der Kontaktbauteile eine Rippe (7) aufweist, **dadurch gekennzeichnet, dass** mindestens zwei benachbarte Kontaktbauteile (5, 6) ein einziges Gussbauteil bilden, und wobei die Rippen (7) der mindestens zwei benachbarten Kontaktbauteile (5, 6) eine einzige durchgehende Rippe bilden, die die mindestens die zwei Kontaktbauteile (5, 6) verbindet.

2. Anti-Rutschvorrichtung gemäß Anspruch 1, wobei die Kontaktbauteile (5, 6) aus Polyurethan hergestellt sind.

3. Anti-Rutschvorrichtung gemäß Anspruch 1, wobei die Anti-Rutschvorrichtung zwei Enden und ein zu jedem der zwei Enden benachbartes Kontaktbauteil (6) aufweist, und wobei die zwei Kontaktbauteile, die benachbart zum jedem der zwei Enden angeordnet sind, komplementäre Verriegelungsmittel aufweisen, um diese beiden Bauteile miteinander in Eingriff zu bringen, so dass die Mehrzahl von Kontaktbauteilen (5, 6) einen flexiblen Ringaufbau bildet, der bei Verwendung um den Reifen herum aufgebracht wird.

4. Anti-Rutschvorrichtung gemäß Anspruch 1, die ferner Spannmittel (9) umfasst, um auf die Anti-Rutschvorrichtung eine Spannung aufzubringen.

5. Anti-Rutschvorrichtung gemäß Anspruch 1, wobei die äußere Oberfläche der Kontaktbauteile einen Überstand (51, 61) aufweist.

6. Anti-Rutschvorrichtung gemäß Anspruch 1, wobei die äußere Oberfläche der Kontaktbauteile (5, 6) einen Überstand (51, 61) aufweist, wobei die Überstände Löcher (53, 63) mit offenen Enden aufweisen, die parallel zu den Rippen (7) angeordnet sind, und wobei ein Federmittel (9) durch die Löcher (53, 63) hindurch angeordnet ist.

7. Anti-Rutschvorrichtung gemäß Anspruch 1, die ferner Federbauteile (8) umfasst, um mit dem Untergrund in Kontakt zu kommen.

8. Anti-Rutschvorrichtung gemäß Anspruch 1, die ferner mindestens ein Federbauteil (8) zwischen zwei benachbarten Kontaktbauteilen umfasst, um mit dem Untergrund in Kontakt zu kommen.

9. Anti-Rutschvorrichtung gemäß Anspruch 1, wobei fünf Kontaktbauteile (5, 6) ein einziges gegossenes Bauteil sind, und wobei die Rippen (7) der fünf Kontaktbauteile (5, 6) eine einzige durchgehende Rippe bilden, die die Kontaktbauteile (5, 6) zusammenhält.

## Revendications

1. Dispositif antidérapant pour pneus, comprenant une pluralité d'éléments de contact (5, 6), chacun des éléments de contact ayant une face interne pour venir en contact avec le pneu et une face externe pour venir en contact avec le sol, dans lequel la face interne des éléments de contact présente une âme (7), **caractérisé en ce qu'**au moins deux éléments de contact adjacents (5, 6) forment un élément coulé unique, et dans lequel les âmes (7) desdits au moins deux éléments de contact adjacents (5, 6) forment une âme continue unique qui réunit lesdits au moins deux éléments de contact (5, 6) l'un à l'autre.

2. Dispositif antidérapant selon la revendication 1, dans lequel les éléments de contact (5, 6) sont fabriqués en polyuréthanne.

3. Dispositif antidérapant selon la revendication 1, dans lequel le dispositif antidérapant a deux extrémités et un élément de contact (6) adjacent à chacune des deux extrémités et dans lequel les deux éléments de contact, disposés de manière adjacente à chacune des deux extrémités, présentent des moyens de blocage complémentaires pour engager ces deux éléments l'un sur l'autre afin que la pluralité des éléments de contact (5, 6) forme une structure annulaire flexible à ajuster en service autour du pneu.

4. Dispositif antidérapant selon la revendication 1, comprenant en outre des moyens de tension (9) pour appliquer une tension au dispositif antidérapant.

5. Dispositif antidérapant selon la revendication 1, dans lequel la surface externe des éléments de contact présente une saillie (51, 61).

6. Dispositif antidérapant selon la revendication 1, dans lequel la surface externe des éléments de contact (5, 6) présente une saillie (51, 61), lesdites saillies ont des trous (53, 63) avec des extrémités ouvertes ménagés parallèlement aux âmes (7), et dans lequel un moyen à ressort (9) est appliqué à travers lesdits trous (53, 63).

7. Dispositif antidérapant selon la revendication 1, comprenant en outre des éléments à ressort (8) pour venir en contact avec le sol.

8. Dispositif antidérapant selon la revendication 1, comprenant en outre au moins un élément à ressort (8) entre deux éléments de contact adjacents pour venir en contact avec le sol.

9. Dispositif antidérapant selon la revendication 1, dans lequel cinq éléments de contact (5, 6) forment un élément coulé unique et dans lequel les âmes (7) desdits cinq éléments de contact (5, 6) forment une âme continue unique qui réunit lesdits éléments de contact (5, 6) l'un à l'autre.
